# EUROPÄISCHE PATENTANMELDUNG

(11) **EP 2 902 225 A1**
(43) Veröffentlichungstag der Anmeldung: **05.08.2015**
(21) Anmeldenummer: 15152568.0
(22) Anmeldetag: 26.01.2015
(51) Int. Cl.: B60G 17/056, B60G 17/052, B60G 17/018, B60G 17/0195, B60G 11/27

(54) **Luftfederungssteuergerät mit Datenverbindung mit weiterem Steuergerät**

(30) Priorität: 29.01.2014 DE 102014101084
(71) Anmelder: KNORR-BREMSE Systeme für Nutzfahrzeuge GmbH, 80809 München (DE)
(72) Erfinder: Csontos, Peter, 6750 Algyö (HU); Deeg, Markus, 71735 Eberdingen (DE)

(57) **Zusammenfassung**

Die Erfindung betrifft eine Fahrzeugregeleinrichtung beinhaltend eine Luftfederungseinrichtung (1) zur Regelung des Niveaus des Fahrzeugaufbaus und/oder des Luftdrucks in wenigstens einem Luftfederbalg (6, 10, 36, 40), welche folgendes umfasst:
a) Den wenigstens einen Luftfederbalg (6, 10, 36, 40),
b) wenigstens einen Niveausensor (52, 53, 54) zum Erfassen eines Ist-Werts des Niveaus des Fahrzeugaufbaus und/oder wenigstens einen Drucksensor (22) zum Erfassen eines Ist-Werts des Luftdrucks in dem wenigstens einen Luftfederbalg (6, 10, 36, 40),
c) wenigstens ein Magnetventil (4, 14, 16, 18, 24, 42, 44, 46, 56, 58) zum Be- und Entlüften des wenigstens einen Luftfederungsbalgs (6, 10, 36, 40),
d) ein erstes elektronisches Steuergerät (ECU1), in welches der wenigstens eine Niveausensor (52, 53, 54) und/oder der wenigstens eine Drucksensor (22) den Ist-Wert für das Niveau des Fahrzeugaufbaus und/oder für den Luftdruck in dem wenigstens seinen Luftfederbalg (6, 10, 36, 40) einsteuert, um zum Regelabgleich des Ist-Werts mit einem Soll-Wert für das Niveau des Fahrzeugaufbaus und/oder für den Luftdruck in dem wenigstens seinen Luftfederbalg (6, 10, 36, 40) Stellbefehle für das wenigstens eine Magnetventil (4, 14, 16, 18, 24, 42, 44, 46, 56, 58) zu erzeugen.

Die Erfindung sieht vor, dass
e) das erste elektronische Steuergerät (ECU1) mit wenigstens einem zweiten elektronischen Steuergerät (ECU2) zum Datenaustausch verbunden ist, in welchem Routinen einer Bremsdruckregelung (EBS) und/oder einer Bremsschlupfregelung (ABS) und/oder einer Antriebsschlupfregelung (ASR) und/oder einer Fahrdynamikregelung (ESP) und/oder eines Fahrerassistenzsystems (ACC) implementiert sind, wobei das zweite elektronische Steuergerät (ECU2) den Soll-Wert für das Niveau des Fahrzeugaufbaus und/oder für den Luftdruck in dem wenigstens einen Luftfederbalg (6, 10, 36, 40) in das erste elektronische Steuergerät (ECU1) einsteuert, damit in dem ersten elektronischen Steuergerät (ECU1) der Regelabgleich erfolgt.

## Beschreibung

Die Erfindung geht aus von einer Fahrzeugregeleinrichtung beinhaltend eine Luftfederungseinrichtung zur Regelung des Niveaus des Fahrzeugaufbaus und/oder des Luftdrucks in wenigstens einem Luftfederbalg, welche folgendes umfasst: Den wenigstens einen Luftfederbalg, wenigstens einen Niveausensor zum Erfassen eines Ist-Werts des Niveaus des Fahrzeugaufbaus und/oder wenigstens einen Drucksensor zum Erfassen eines Ist-Werts des Luftdrucks in dem wenigstens einen Luftfederbalg, wenigstens ein Magnetventil zum Be- und Entlüften des wenigstens einen Luftfederungsbalgs, gemäß dem Oberbegriff von Anspruch 1.

Eine solche Fahrzeugregeleinrichtung ist beispielsweise aus der gattungsbildenden EP 1 591 281 B1 bekannt, welche eine Luftfederungseinrichtung aufweist, beinhaltend einen Ventilblock zum Belüften von mehreren Luftbälgen mit Druckluft aus einem Druckluftvorrat oder zum Entlüften der Luftbälge durch eine Entlüftung, wobei der Ventilblock einem Luftbalg oder einer Gruppe von Luftbälgen der mehreren Luftbälge zugeordnete Luftbalgventile als Magnetventile zum individuellen Be- und Entlüften dieses Luftbalgs oder der Gruppe von Luftbälgen beinhaltet. Weiterhin messen zwei Niveaugeber, ein der rechten Seite zugeordneter Niveaugeber und ein der linken Seite zugeordneter Niveaugeber den Abstand zwischen der Hinterachse und dem Fahrzeugaufbau. Weiterhin ist auch der Vorderachse ein Niveaugeber zugeordnet. Die Niveaugeber sind mit einem elektronischen Steuergerät verbunden, in welchem ein Soll-Wert für das Niveau des Fahrzeugaufbaus abgelegt ist. Bei Be- oder Entladung des Fahrzeugs melden der oder die Niveaugeber des betroffenen Abschnitts des Fahrzeugaufbaus den bedingt durch die Beladungsänderung veränderten Ist-Wert des Niveaus an das Steuergerät, welches daraufhin durch Ansteuerung der Luftbalgventile den Ist-Wert an den Soll-Wert anpasst.

Der vorliegenden Erfindung liegt demgegenüber die Aufgabe zugrunde, eine Fahrzeugregeleinrichtung beinhaltend eine Luftfederungseinrichtung der eingangs erwähnten Art derart weiter zu entwickeln, dass ihr Funktionsumfang erweitert wird.

Diese Aufgabe wird erfindungsgemäß durch die kennzeichnenden Merkmale von Anspruch 1 gelöst.

### Offenbarung der Erfindung

Die Erfindung basiert auf dem Gedanken, dass das erste elektronische Steuergerät mit wenigstens einem zweiten elektronischen Steuergerät zum Datenaustausch verbunden ist, in welchem Routinen einer Bremsdruckregelung (EBS) und/oder einer Bremsschlupfregelung (ABS) und/oder einer Antriebsschlupfregelung (ASR) und/oder einer Fahrdynamikregelung (ESP) und/oder eines Fahrerassistenzsystems (ACC) implementiert sind, wobei das zweite elektronische Steuergerät den Soll-Wert für das Niveau des Fahrzeugaufbaus und/oder für den Luftdruck in dem wenigstens einen Luftfederbalg in das erste elektronische Steuergerät einsteuert, damit in dem ersten elektronischen Steuergerät der Regelabgleich erfolgt.

Mit einer solchen Fahrzeugregeleinrichtung ist es dann beispielsweise möglich, dass der Luftdruck in den Luftfederbälgen und damit deren Federrate fahrsituationsabhängig bzw. abhängig von Fahrbetriebsbedingungen angepasst wird.

Wenn beispielsweise eine Fahrdynamikregelung wie z.B. ESP instabiles Fahrverhalten des Fahrzeugs detektiert, so kann es über eine Vorgabe von neuen Soll-Werten für den Luftdruck in einem Luftfederbalg, einigen Luftfederbälgen oder allen Luftfederbälgen und/oder für das Niveau des Aufbaus an einem Rad, einer Achse oder insgesamt die Fahrstabilität wieder herstellen oder zumindest verbessern. Hintergrund dieser Maßnahme ist daher, dass durch eine gezielte Veränderung der Federrate bzw. des Aufbauniveaus das Fahrverhalten beeinflusst wird. Diese Beeinflussung erfolgt durch die Kommunikation des ersten elektronischen Steuergeräts, in welchem der Soll-/Ist-Wert-Abgleich stattfindet mit dem wenigstens einem zweiten elektronischen Steuergerät statt, welches dem ersten, den Luftdruck in den Luftfederbälgen steuernden Steuergerät den oder die neuen Soll-Werte für den Luftdruck und/oder das Niveau vorgibt.

Das zweite Steuergerät kann dabei in jeglichem System oder in jeglicher Regeleinrichtung das Regelsteuergerät bilden, mit welcher die Fahrstabilität des Fahrzeugs beeinflusst werden kann, insbesondere eine Bremsdruckregelung (EBS), eine Bremsschlupfregelung (ABS) oder eine Antriebsschlupfregelung (ASR). Ganz allgemein ist dann das zweite Steuergerät ein Bremssteuergerät.

Des Weiteren kann das zweite Steuergerät in jeglichem System oder in jeglicher Regeleinrichtung das Regelsteuergerät bilden, welches ein Fahrerassistenzsystem darstellt. Ein solches Fahrerassistenzsystem kann beispielsweise durch einen Abstandsregeltempomaten (ACC, Adaptive Cruise Control), ein Kneeling-System eines Autobusses oder ein System zur Anpassung der Fahrzeughöhe während der Fahrt gebildet werden.

Beispielsweise kann bei einem Abstandsregeltempomaten (ACC, Adaptive Cruise Control) bei erkanntem drohendem Aufprall auf ein vorausfahrendes Fahrzeug und einer damit verbundenen automatischen Bremsung mit hoher oder maximaler Bremskraft der damit verbundenen Achslastverlagerung dadurch begegnet werden, dass die Federrate an der Vorderachse durch Vorgabe eines entsprechenden Soll-Werts für den Luftdruck bzw. das Niveau in den betreffenden Luftfederbälgen erhöht wird.

Wenn ein System zur Anpassung der Fahrzeughöhe während der Fahrt beispielsweise feststellt, dass aufgrund der momentanen Fahrzeughöhe aufgrund des momentanen Ist-Werts des Fahrzeugaufbaus eine Brücke nicht unterfahren werden kann, so gibt das (zweite) Steuergerät dieses Systems dem ersten Steuergerät einen neuen geringeren Soll-Wert vor, damit das Niveau des Fahrzeugaufbaus so angepasst wird, dass die Brücke unterfahren werden kann.

In allen Fällen findet der Regelabgleich stets in dem ersten Steuergerät statt, welches das wenigstens eine Magnetventil zum Be- bzw. Entlüften des wenigstens einen Luftfederbalgs ansteuert. Weiterhin stellen das erste Steuergerät und das zweite Steuergerät bevorzugt separate Steuergeräte dar, welche nicht in einem einzigen Steuergerät integriert sind.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist das erste elektronische Steuergerät mit dem zweiten elektronischen Steuergerät über einen Datenbus verbunden, beispielsweise über einen CAN-Bus (Controller Area Network).

Gemäß einer Weiterbildung können wenigstens das wenigstens eine Magnetventil und das erste elektronische Steuergerät zu einer Baueinheit modulartig zusammengefasst sein, insbesondere zu einem Luftfederungsmodul.

Bevorzugt kann die Luftfederungseinrichtung ausgebildet sein, dass der Luftdruck in dem wenigstens einen Luftfederbalg (Federrate) und/oder das Niveau des Fahrzeugaufbaus radindividuell, achsweise oder seitenweise regelbar ist. Dann kann das zweite Steuergerät Soll-Werte für den Luftdruck und/oder das Niveau individuell für einen bestimmten Luftfederbalg (radweise), einige der Luftfederbälge (z.B. seitenweise oder an einer Achse) oder auch für alle Luftfederbälge des Fahrzeugs vorgeben, um beispielsweise die Fahrstabilität, das Bremsverhalten, das Anfahrverhalten usw. zu beeinflussen.

Gemäß einer besonders zu bevorzugenden Maßnahme kann der über den entsprechenden Sensor erfasste und an das erste Steuergerät gemeldete Ist-Wert für das Niveau des Fahrzeugaufbaus und/oder für den Luftdruck in dem wenigstens einen Luftfederbalg über die Datenverbindung bzw. den Datenbus von dem ersten elektronische Steuergerät in das zweite elektronische Steuergerät eingesteuert werden, um dort für wenigstens eine von einer Regelung des Niveaus des Fahrzeugaufbaus und/oder von einer Regelung des Luftdrucks in dem wenigstens einen Luftbalg abweichenden Funktion verwendet zu werden. Bei einer solchen Funktion kann es sich um eine beliebige Funktion handeln.

Weiterhin können an die Datenverbindung bzw. an den Datenbus, an den das erste Steuergerät und das zweite Steuergerät angeschlossen sind, noch weitere Steuergeräte angeschlossen sein, welche weitere Funktionen in dem Fahrzeug ausführen.

Gemäß einer Weiterbildung können von dem Niveausensor und von dem Drucksensor abweichende Sensoren vorgesehen sein, welche Signale an das erste Steuergerät zur dortigen Verarbeitung einsteuern, wobei diese Signale auch in das zweite Steuergerät eingesteuert werden, um sie dort zu verarbeiten. Bei solchen Sensoren kann es sich insbesondere um Reifendrucksensoren und/oder Raddrehzahlsensoren handeln. Aus den Signalen der Raddrehzahlsensoren können beispielsweise Daten (Radgeschwindigkeiten, Referenzgeschwindigkeit) für eine im zweiten Steuergerät implementierte Fahrdynamikregelung wie Brems- oder Antriebsschlupfregelung (ABS, ASR) bestimmt werden. Insbesondere kann daher das zweite Steuergerät (ECU2) ein Bremssteuergerät oder ein zentraler Fahrzeugrechnet sein.

Genaueres geht aus der folgenden Beschreibung der Ausführungsbeispiele hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: einen schematischen Funktionsschaltplan einer Fahrzeugregeleinrichtung mit einer Luftfederungseinrichtung gemäß einer ersten Ausführungsform der Erfindung;
- Fig.2: einen schematischen Funktionsschaltplan einer Fahrzeugregeleinrichtung mit einer Luftfederungseinrichtung gemäß einer weiteren Ausführungsform der Erfindung.

### Beschreibung der Ausführungsbeispiele

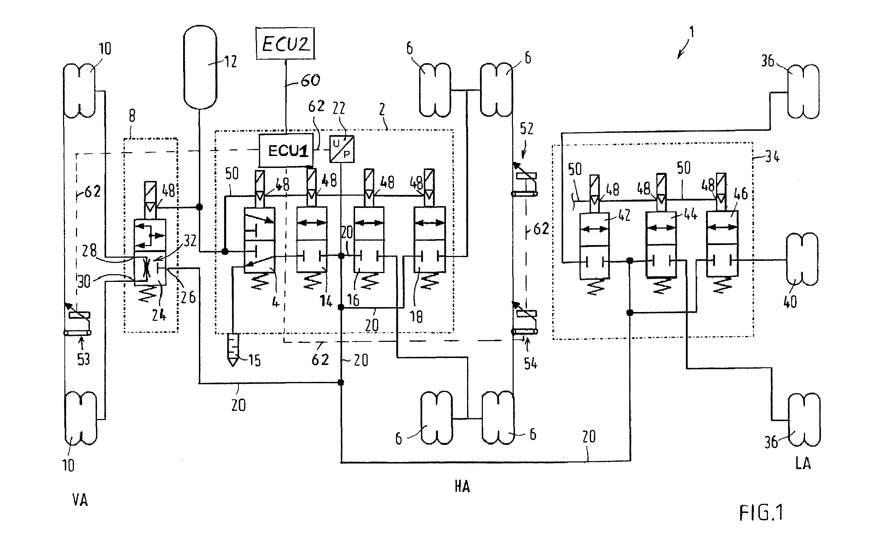

Die in Fig.1 gezeigte Ausführungsform einer Fahrzeugregeleinrichtung eines Nutzfahrzeugs beinhaltet eine Luftfederungseinrichtung 1. Diese umfasst einen einer angetriebenen Hinterachse HA zugeordneten Ventilblock 2, beinhaltend ein zentrales 3/2-Wegeventil 4 um Be- und Entlüften von Luftfederbälgen 6 der Hinterachse, und einen einer Vorderachse VA zugeordneten Ventilblock 8 zum Be- und Entlüften von Luftfederbälgen 10 der Vorderachse VA.

Das zentrale 3/2-Wegeventil 4 des der Hinterachse HA zugeordneten Ventilblocks 2 bringt entweder einen Druckluftvorrat 12 mit einem Druckanschluss eines 2/2-Wegeventils 14 oder Letzteren mit einer Entlüftung 15 in Verbindung. Ein weiterer Druckanschluss des 2/2-Wegeventils 14 ist mit Druckanschlüssen von nachgeschalteten, den Luftfederbälgen 6 je einer Fahrzeugseite der Hinterachse HA zugeordneten Luftbalgventilen in Form von 2/2-Wegeventilen 16, 18 verbunden, deren weitere Druckanschlüsse mit den Luftfederbälgen 6 der Hinterachse HA verbunden sind. Weiterhin ist der in Bezug auf die Luftbalgventile 16, 18 diesseitige Druckanschluss des 2/2-Wegeventils 14 über eine Druckleitung 20 an einen Drucksensor 22 angeschlossen. Der Drucksensor 22 misst den Druck in der Druckleitung 20, insbesondere in einer Druckverbindung zwischen dem 2/2-Wegeventil 14 und den Luftbalgventilen 16, 18, jenseits der Luftfederbälge 6. Die Druckverbindung 20 kann beispielsweise als Druckkanal in dem Ventilblock 2 ausgebildet sein. Die beiden Luftbalgventile 16, 18 schalten als 2/2-Wegeventile entweder die ihnen zugeordneten Luftfederbälge 6 der Hinterachse HA auf den Druckanschluss des 2/2-Wegeventils 14 oder sperren eine solche Verbindung.

Der der Vorderachse VA zugeordnete Ventilblock 8 beinhaltet ebenfalls ein 2/2-Wegeventil 24, welches wie ein oben beschriebenes Luftbalgventil wirkt und je nach seiner Schaltstellung entweder seinen Vorratsdruckanschluss 26 mit Anschlüssen 28, 30 der Luftfederbälge 10 der Vorderachse VA oder, darüber hinaus in einer Fahrstellung die beiden Anschlüsse 28, 30 über eine Drossel 32 miteinander verbindet und den Vorratsdruckanschluss 26 sperrt. Der Vorratsdruckanschluss 26 des Ventilblocks 8 ist wiederum mit der Druckleitung 20 und insbesondere mit dem Druckanschluss des 2/2-Wegeventils 14 und mit dem Drucksensor 22 verbunden.

Ein weiterer, einer Liftachse LA zugeordneter Ventilblock 34 umfasst zwei Luftfederbälge 36 für die rechte und linke Seite der Liftachse LA sowie einen Hubbalg 40 zum Heben und Senken der Liftachse LA, welche eine Vorlaufoder eine Nachlaufachse sein kann. Dabei ist den beiden Luftfederbälgen 36 und dem Hubbalg 40 der Liftachse LA je ein 2/2-Wegeventil 42, 44, 46 als Luftbalgventil zugeordnet, von welchem ein Druckanschluss jeweils mit der Druckleitung 20 und der andere Druckanschluss mit dem jeweiligen Luftbalg 36, 40 in Verbindung steht. Somit ist der Drucksensor 22 über die Druckleitung 20 mit sämtlichen Luftbalgventilen 16, 18, 24, 42, 44, 46 verbunden.

Sämtliche Ventile 4, 16, 18, 24, 42, 44 und 46 sind vorzugsweise als pneumatisch vorgesteuerte Magnetventile ausgebildet, d.h. dass sie jeweils durch ein aus Maßstabsgründen nicht gezeigtes Relaisventil angesteuert werden, welches seinerseits elektrisch gesteuert wird. Die elektrische Ansteuerung der Ventile 4, 16, 18, 24, 42, 44 und 46 wird über ein erstes elektronisches Steuergerät ECU1 realisiert. Zur Druckluftversorgung der Vorsteuerung ist ein jeder Steueranschluss 48 der Magnetventile 4, 16, 18, 24, 42, 44 und 46 über eine pneumatische Leitung 50 mit dem Druckluftvorrat 12 verbunden.

Zwei Niveaugeber, ein der rechten Seite zugeordneter Niveaugeber 52 und ein der linken Seite zugeordneter Niveaugeber 54 messen beispielsweise hier mit Hilfe von Drehpotentiometern, deren Spannungsabgriff über je einen Antriebshebel mit der Hinterachse HA verbunden ist, den Abstand zwischen der Hinterachse HA und dem Fahrzeugaufbau. Ein weiterer Niveaugeber 53 dieser Bauart ist der Vorderachse VA zugeordnet. Alternativ können auch berührungslos arbeitende Niveaugeber 52, 53 und 54 verwendet werden, welche beispielsweise auf induktiver Basis arbeiten.

Die Niveaugeber 52, 53, 54 sind mit dem ersten elektronischen Steuergerät ECU1 über Datenleitungen 62 signalübertragend verbunden. Der Ventilblock 2 der Hinterachse HA, der Drucksensor 22 sowie das erste elektronische Steuergerät ECU1 für die pneumatisch-elektrische Vorsteuerung sind in einer Baueinheit zusammengefasst, beispielsweise dadurch, dass diese Bauteile in einem gemeinsamen Gehäuse aus Kunststoff oder aus Aludruckguss untergebracht sind.

Vor diesem Hintergrund ist die Funktionsweise der erfindungsgemäßen Luftfederungseinrichtung 1 wie folgt:
Wenn bei abgesenkter Liftachse LA das Nutzfahrzeug beladen wird, so werden die Luftfederbälge 6, 10 und 36 zusammengedrückt und der Fahrzeugaufbau senkt sich. Die mit der Hinterachse HA und der Vorderachse VA verbundenen Hebel drehen die Schleifer der Drehpotentiometer der Niveaugeber 52, 53, 54 auf der jeweiligen Potentiometerbahn in die Stellung "Heben". Das erste Steuergerät ECU1 erkennt die Spannungsabweichung und gibt elektrische Stellbefehle an das 3/2-Wegeventil 4 und die beiden Liftbalgventile 16, 18 des der Hinterachse HA zugeordneten Ventilblocks 2, an das 2/2-Wegeventil 24 des der Vorderachse VA zugeordneten Ventilblocks 8 sowie an die beiden den Luftfederbälgen 36 der Liftachse LA zugeordneten Luftbalgventile 42, 44 (bestromter Zustand).

Das 3/2-Wegeventil 4 des der Hinterachse HA zugeordneten Ventilblocks 2 schaltet daraufhin in seine Belüftungsstellung, in welcher der Druckluftvorrat 12 mit dem Druckanschluss des 2/2-Wegeventils 14 verbunden wird, welches durchgeschaltet den Druck an die Druckanschlüsse der nachgeschalteten Luftbalgventile 16, 18 weiterleitet, welches ihrerseits diesen Druck zu den Luftfederbälgen 6 der Hinterachse HA durchschalten. Gleichzeitig steht dieser Druck in der Druckleitung 20 zwischen dem 2/2-Wegeventil 14 und den beiden Luftbalgventilen 16, 18 an und wird über diese in den Vorratsdruckanschluss 26 des 2/2-Wegeventils 24 des der Vorderachse VA zugeordneten Ventilblocks 8 eingesteuert, welches ihn an die Luftfederbälge 10 der Vorderachse VA weiterschaltet. Gleichzeitig steht der Druck des Druckluftvorrats 12 über die Druckleitung 20 auch an den Druckanschlüssen der sich in Durchschaltstellung befindlichen Luftbalgventile 42, 44 der Liftachse LA an.

Hierdurch werden die Luftfederbälge 6, 10, 36 der Hinter-, Vorder- und Liftachse HA, VA, LA belüftet und der Fahrzeugaufbau insgesamt auf das gewünschte Soll-Niveau angehoben. Durch eine entsprechende individuelle Ansteuerung der Luftbalgventile 16, 18, 42, 44 der Hinterachse HA und der Liftachse LA kann das Niveau der beiden Fahrzeugseiten unterschiedlich angepasst, werden, was im Falle einer exzentrischen Ladung notwendig sein kann. Ebenfalls ist ein unterschiedliches Niveau an der Hinterachse HA, an der Vorderachse VA und an der Liftachse LA durch eine entsprechende Ansteuerung der Luftbalgventile 16, 18, 24, 42, 44 möglich. Mit dem beschriebenen Aufbau der Luftfederungseinrichtung 1 kann folglich nicht nur eine Individualregelung sondern auch eine Gleichdruckregelung realisiert werden, durch gleichzeitiges und seitenweises Ansteuern der beiden Luftbalgventile 16, 18 der Hinterachse und der Liftachse 42, 44, wobei zwischen der rechten und linken Fahrzeugseite alternierend umgeschaltet wird. Der jeweilige Regelalgorithmus kann wahlweise im ersten Steuergerät ECU1 programmiert sein.

In Fahrstellung, d.h. mit an das Soll-Niveau angepasstem Niveau des Fahrzeugaufbaus sind sämtliche Magnetventile 4, 14, 16, 18, 24, 42, 44 und 46 unbestromt und in Schaltstellungen, in welche die Luftfederbälge 6, 10, 36 sowohl gegen den Druckluftvorrat 12 als auch gegen die Entlüftung 15 gesperrt sind, so dass keine Druckluft aus den Luftfederbälgen 6, 10, 36 hinein- oder aus ihnen herausströmen kann.

Nachdem das gewünschte Niveau eingestellt ist, kann durch individuelles Schalten der Luftbalgventile 16, 18, 24, 42, 44 der Drucksensor 22 mit allen Luftfederbälgen 6, 10, 36 verbunden und damit der jeweils vorherrschende statische Druck ermittelt werden, durch welchen auf den Beladungszustand des Nutzfahrzeugs bzw. auf die Lastverteilung rückgeschlossen werden kann. Wenn beispielsweise bei eingestelltem Soll-Niveau die den Luftfederbälgen 6 der Hinterachse HA zugeordneten Luftbalgventile 16, 18 und auch das vorgeschaltete 2/2-Wegeventil 14 wegen fehlender Notwendigkeit einer weiteren Belüftung sich in Sperrstellung befinden und der Lastzustand an der Hinterachse HA ermittelt werden soll, werden lediglich die beiden Luftbalgventile 16, 18 geöffnet, woraufhin der in den Luftfederbälgen 6 der Hinterachse HA herrschende Druck ebenfalls in der Druckleitung 20 zwischen den Luftbalgventilen 16, 18 und dem weiterhin gesperrten 2/2-Wegeventil 14 ansteht und folglich vom Drucksensor 22 gemessen werden kann. Weil das den Luftbalgventilen 16, 18 vorgeschaltete 2/2-Wegeventil 14 bei einer solchen Druckmessung stets geschlossen bleibt und die Luftfederbälge 6 damit vom Druckluftvorrat 12 und der Entlüftung 15 abgekoppelt sind, ist keine Be- oder Entlüftung der Luftfederbälge 6 und damit auch keine Druckänderung möglich. Andererseits kann die an den Drucksensor 22 angeschlossene Druckleitung 20 zwischen dem 2/2Wegeventil 14 und den Luftbalgventilen 16, 18 jederzeit unter den in dem jeweiligen Luftfederbalg 6 herrschenden Druck durch Öffnen des jeweiligen Luftbalgventils 16, 18 gesetzt und folglich der Druck in jedem Luftfederbalg 6 individuell gemessen werden. Der Drucksensor 22 befindet sich bezogen auf den Strömungsweg zwischen dem 2/2-Wegeventil 14 und den Luftbalgventilen 16, 18 folglich an einer zentralen Stelle.

Eine Messung des Beladungszustands erfolgt vorzugsweise nach jeder Beladungsänderung. Da sich Druckstöße aufgrund einer Fahrt über Unebenheiten nicht auf das Messergebnis auswirken sollen, soll eine Druckmessung bevorzugt bei langsamer Fahrt bzw. im Stillstand stattfinden.

Zum Absenken des Niveaus des Fahrzeugaufbaus drehen die mit den Fahrzeugachsen verbundenen Hebel die Schleifer der Drehpotentiometer der Niveaugeber 52, 53, 54 auf der jeweiligen Potentiometerbahn in die Stellung "Senken". Das erste Steuergerät ECU1 erkennt die Spannungsabweichung und gibt elektrische Stellbefehle an das 3/2-Wegeventil 4 und die Luftbalgventile 16, 18 des der Hinterachse HA zugeordneten Ventilblocks 2, an das 2/2-Wegeventil 24 des der Vorderachse VA zugeordneten Ventilblocks 8 sowie an die Luftbalgventile 42, 44 des Ventilblocks 34 der Liftachse LA.

Zum gleichmäßigen Absenken des Fahrzeugaufbaus schalten sämtliche Luftbalgventile 16, 18, 24, 42, 44 sowie das 2/2-Wegeventil 14 des Ventilblocks 2 der Hinterachse HA durch. Weiterhin wird das 3/2-Wegeventil 4 des der Hinterachse HA zugeordneten Ventilblocks 2 in seine Entlüftungsstellung geschaltet, in welcher es das 2/2-Wegeventil 14 mit der Entlüftung 15 verbindet und seinen mit dem Druckluftvorrat 12 verbundenen Druckanschluss sperrt. Infolgedessen wird der Druck in den Luftfederbälgen 6 der Hinterachse HA reduziert. Gleichzeitig schaltet das 2/2-Wegeventil 24 der Vorderachse VA in Durchgangsstellung, in welcher der Strömungsweg zwischen den Luftfederbälgen 10 der Vorderachse VA und der Druckleitung 20 geöffnet ist und folglich Druckluft aus den Luftfederbälgen 10 über die Druckleitung 20, das geöffnete 2/2-Wegeventil 14 und das 3/2-Wegeventil 4 in die Entlüftung 15 strömen kann, bis das Soll-Niveau erreicht ist. Gleiches gilt auch für den Strömungsweg der abzuführenden Druckluft aus den Luftfederbälgen 36 der Liftachse LA über die geöffneten Luftbalgventile 42, 44 und die Druckleitung 20.

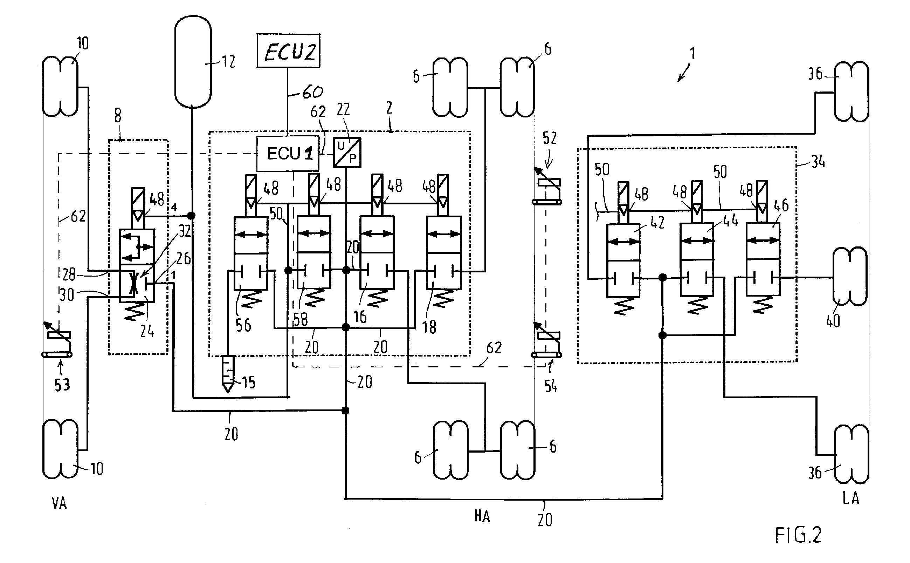

Bei dem weiteren Ausführungsbeispiel der Erfindung nach Fig.2 sind die gegenüber dem vorhergehenden Beispiel gleichbleibenden und gleich wirkenden Teile durch die gleichen Bezugszahlen gekennzeichnet. Im Unterschied zu diesem beinhaltet der Ventilblock der Hinterachse HA anstatt ein 3/2-Wegeventil ein erstes 2/2-Wegeventil 56, welches entweder die Entlüftung 15 zur Druckleitung 20 und damit zu den Luftbalgventilen 16, 18, 24, 42, 44 durchschaltet oder diesen Strömungsweg sperrt. Weiterhin ist ein nachgeschaltetes zweites 2/2-Wegeventil 58 vorhanden, welches entweder den Druckluftvorrat 12 über die Druckleitung 20 zu den Luftbalgventilen 16, 18, 24, 42, 44 durchschaltet oder diesen Strömungsweg sperrt. Das erste 2/2-Wegeventil 56 dient folglich einerseits der Entlüftung aller Luftfederbälge 6, 10, 36 und andererseits zur Abkopplung Letzterer von der Entlüftung 15, um eine Messung des statischen Drucks in der Druckleitung 20 durch den Drucksensor 22 zu ermöglichen. Genauso führt das zweite 2/2-Wegeventil 58 eine Doppelfunktion aus, indem es zum einen die Druckluft im Druckluftvorrat 12 an die nachgeordneten Luftbalgventile 16, 18, 24, 42, 44 weiterschalten und zum andern Letztere vom Druckluftvorrat 12 während einer statischen Druckmessung abkoppelt.

Mit den obigen Ausführungsbeispielen wurde daher eine Luftfederungseinrichtung 1 für Fahrzeuge, insbesondere für Nutzfahrzeuge beinhaltend einen Ventilblock 2 zum Belüften von mehreren Luftbälgen 6, 10, 36, 40 mit Druckluft aus einem Druckluftvorrat 12 oder zum Entlüften der Luftbälge 6, 10, 36, 40 durch eine Entlüftung 15, wobei der Ventilblock 2 wenigstens ein einem Luftbalg oder einer Gruppe von Luftbälgen der mehreren Luftbälge 6, 10, 36, 40 zugeordnetes Luftbalgventil 16, 18, 24, 42, 44, 46 zum individuellen Be- und Entlüften dieses Luftbalgs oder dieser Gruppe von Luftbälgen beinhaltet.

Der Ventilblock 2 umfasst weiterhin eine Ventileinrichtung 14, 56, 58, durch welche das wenigstens eine Luftbalgventil 16, 18, 24, 42, 44, 46 gleichzeitig vom Druckluftvorrat 12 und von der Entlüftung 15 abkoppelbar ist, wobei ein Drucksensor 22 zum Messen des Luftdrucks im Strömungsweg 20 zwischen der Ventileinrichtung 14,56, 58 und dem wenigstens einen Luftbalgventil 16, 18, 24, 42, 44, 46, jenseits des zugeordneten Luftbalgs vorgesehen ist.

Bevorzugt sind der die Ventileinrichtung 14, 56, 58 beinhaltende Ventilblock 2 und der Drucksensor 22 einer Achse eines Nutzfahrzeugs, insbesondere einer Hinterachse HA zugeordnet.

Weiterhin sind bevorzugt durch den der einen Achse HA zugeordneten Ventilblock 2 gleichzeitig wenigstens einer weiteren Achse, insbesondere einer Vorderachse VA und einer Liftachse LA zugeordnete Luftbälge 10, 36, 40 belüftbar oder entlüftbar.

Darüber hinaus ist bevorzugt der Drucksensor 22 mit dem Luftbalg oder der Gruppe von Luftbälgen der jeweiligen Achse HA, VA, LA durch Durchschalten der den Luftbälgen 6, 10, 36, 40 zugeordneten Luftbalgventile 16, 18, 24, 42, 44, 46 in druckleitende Verbindung bringbar.

Gemäß einer weiteren Maßnahme kann der Ventilblock 2 der Hinterachse HA ein 3/2-Wegeventil 4 oder auch mehrere solcher 3/2-Wegeventile 4 beinhalten, welches entweder die Entlüftung 15 oder den Druckluftvorrat 12 mit einem Anschluss der Ventileinrichtung 14 verbindet.

Weiterhin kann die Ventileinrichtung ein 2/2-Wegeventil 14 oder mehrere solcher 2/2-Wegeventile 14 beinhalten, welches entweder den Anschluss zu den Luftbalgventilen 16, 18, 24, 42, 44, 46 durchschaltet oder ihn sperrt.

Außerdem kann die Ventileinrichtung ein 2/2-Wegeventil 56 beinhalten, welches entweder die Entlüftung 15 zu den Luftbalgventilen 16, 18, 24, 42, 44, 46 durchschaltet oder diesen Strömungsweg sperrt.

Nicht zuletzt kann die Ventileinrichtung ein weiteres 2/2-Wegeventil 58 beinhalten, welches entweder den Druckluftvorrat 12 zu den Luftbalgventilen 16, 18, 24, 42, 44, 46 durchschaltet oder diesen Strömungsweg sperrt.

Gemäß einer Weiterbildung kann zumindest an der Hinterachse HA und an der Liftachse LA den Luftbälgen 6, 36 jeder Fahrzeugseite ein 2/2-Wegeventil 16, 18, 42, 44 als Luftbalgventil zugeordnet sein.

Bei der Luftfederungseinrichtung können wenigstens einige der Ventile 4, 14, 16, 18, 24, 42, 44, 46, 56, 58 Magnetventile mit einem pneumatischen Vorsteueranschluss 48 für eine pneumatisch-elektrische Vorsteuerung sein.

Außerdem sind bevorzugt zumindest der der Hinterachse HA zugeordnete Ventilblock 2, der Drucksensor 22 sowie ein erstes elektronisches Steuergerät ECU1 für die pneumatisch-elektrische Vorsteuerung in einer Baueinheit zusammengefasst.

Schließlich beinhaltet bei der Luftfederungseinrichtung 1 bevorzugt ein der Vorderachse VA zugeordneter Ventilblock 8 ein 2/2-Wegeventil 24, durch welches die Luftfederbälge 10 der Vorderachse VA über eine Drosseleinrichtung 32 miteinander oder mit den Luftbalgventilen 16, 18, 42, 44, 46 der anderen Achsen HA, LA verbunden sind. Der Ventilblock 8 kann auch in dem Ventilblock 2 integriert sein.

Das erste elektronische Steuergerät ECU1 ist mit einem zweiten elektronischen Steuergerät ECU2 zum Datenaustausch verbunden, beispielsweise über einen CAN-Datenbus 60.

In dem zweiten Steuergerät ECU2 sind Routinen einer Bremsdruckregelung (EBS) und/oder einer Bremsschlupfregelung (ABS) und/oder einer Antriebsschlupfregelung (ASR) und/oder einer Fahrdynamikregelung (ESP) und/oder eines Fahrerassistenzsystems (ACC) implementiert, wobei das zweite elektronische Steuergerät ECU2 den Soll-Wert für das Niveau des Fahrzeugaufbaus und/oder für den Luftdruck in wenigstens einem Luftfederbalg 6, 10, 36, 40 in das erste elektronische Steuergerät ECU1 einsteuert, damit in dem ersten elektronischen Steuergerät ECU1 der Regelabgleich erfolgt. Bei dem zweiten Steuergerät ECU2kann es sich beispielsweise um ein Bremsteuergerät zur Steuerung der Bremsfunktionen des Fahrzeugs inklusive fahrdynamischer Funktionen wie ESP, ABS, ASR handeln, insbesondere um das zentrale Bremssteuergerät eines elektronisch geregelten Bremssystems (EBS), welche Achsen und/oder Rädern zugeordnete Druckregelmodule steuert. Weiterhin kann das zweite Steuergerät ECU2 auch in einem zentralen Fahrzeugrechner bestehen.

Wie oben bereits dargestellt, ist die Luftfederungseinrichtung 1 ausgebildet, dass der Luftdruck in wenigstens einem der Luftfederbälge 6, 10, 36, 40 bzw. das Niveau des Fahrzeugaufbaus radindividuell, achsweise oder seitenweise regelbar ist. Dann gibt das zweite Steuergerät ECU2 Soll-Werte für den Luftdruck und/oder das Niveau individuell für einen bestimmten Luftfederbalg 6, 10, 36, 40 (radweise), einige der Luftfederbälge 6, 10, 36, 40 (z.B. seitenweise oder an einer Achse) oder auch für alle Luftfederbälge 6, 10, 36, 40 des Nutzfahrzeugs vor, um beispielsweise die Fahrstabilität, das Bremsverhalten, das Anfahrverhalten, den Fahrbetrieb usw. des Nutzfahrzeugs zu beeinflussen.

Gemäß einer besonders zu bevorzugenden Maßnahme kann der über den entsprechenden Drucksensor 22 erfasste und an das erste Steuergerät ECU1 gemeldete Ist-Wert für den Luftdruck in dem oder den betreffenden Luftfederbälgen 6, 10, 36, 40 bzw. der von dem oder den Niveaugebern 52, 53, 54 erfasste Ist-Wert für das Niveau des Fahrzeugaufbaus über den Datenbus von dem ersten elektronische Steuergerät ECU1 in das zweite elektronische Steuergerät ECU2 eingesteuert werden, um dort für wenigstens eine von einer Regelung des Niveaus des Fahrzeugaufbaus und/oder von einer Regelung des Luftdrucks in wenigstens einem der Luftfederbälge 6, 10, 36, 40 abweichenden Funktion verwendet zu werden.

Dasselbe gilt auch für die Signale von evtl. vorhandenen weiteren Sensoren, welche über Datenleitungen mit dem ersten Steuergerät ECU1 verbunden sind, um diese Signale in das erste Steuergerät ECU1 einzusteuern und dort zu verarbeiten. Diese Signale werden dann über den CAN-Datenbus 60 dem zweiten Steuergerät ECU 2 bzw. weiteren Steuergeräten zur dortigen Verarbeitung zur Verfügung gestellt. Solche Sensoren können Reifendrucksensoren und/oder Raddrehzahlsensoren beinhalten, deren Signale an das erste Steuergerät ECU1 gemeldet und dort verarbeitet werden und über den CAN-Datenbus 60 an das zweite Steuergerät ECU2 bzw. an weitere Steuergeräte zur dortigen Verarbeitung weiter geleitet werden.

Anstatt nur eines einzigen zweiten Steuergeräts ECU2 können auch mehrere zweite Steuergeräte ECU2 mit dem ersten Steuergerät ECU1 verbunden sein, um einen Soll-Wert für den Luftdruck bzw. das Niveau vorzugeben.

### Bezugszeichenliste

- 1: Luftfederungseinrichtung
- 2: Ventilblock
- 4: 3/2-Wegeventil
- 6: Luftfederbälge
- 8: Ventilblock
- 10: Luftfederbälge
- 12: Druckluftvorrat
- 14: 2/2-Wegeventil
- 15: Entlüftung
- 16: 2/2-Wegeventil
- 18: 2/2-Wegeventil
- 20: Druckleitung
- 22: Drucksensor
- 24: 2/2-Wegeventil
- 26: Vorratsdruckanschluss
- 28: Anschluss
- 30: Anschluss
- 32: Drossel
- 34: Ventilblock
- 36: Luftfederbälge
- 40: Hubbalg
- 42: 2/2-Wegeventil
- 44: 2/2-Wegeventil
- 46: 2/2-Wegeventil
- 48: Steueranschluss
- 50: pneumat. Leitung
- 52: Niveaugeber
- 53: Niveaugeber
- 54: Niveaugeber
- 56: 2/2-Wegeventil
- 58: 2/2-Wegeventil
- 60: CAN-Datenbus
- 62: Datenleitungen

## Patentansprüche

1. Fahrzeugregeleinrichtung beinhaltend eine Luftfederungseinrichtung (1) zur Regelung des Niveaus des Fahrzeugaufbaus und/oder des Luftdrucks in wenigstens einem Luftfederbalg(6, 10, 36, 40), welche folgendes umfasst:
a) Den wenigstens einen Luftfederbalg (6, 10, 36, 40),
b) wenigstens einen Niveausensor (52, 53, 54) zum Erfassen eines Ist-Werts des Niveaus des Fahrzeugaufbaus und/oder wenigstens einen Drucksensor (22) zum Erfassen eines Ist-Werts des Luftdrucks in dem wenigstens einen Luftfederbalg (6, 10, 36, 40),
c) wenigstens ein Magnetventil (4, 14, 16, 18, 24, 42, 44, 46, 56, 58) zum Be- und Entlüften des wenigstens einen Luftfederungsbalgs (6, 10, 36, 40),
d) ein erstes elektronisches Steuergerät (ECU1), in welches der wenigstens eine Niveausensor (52, 53, 54) und/oder der wenigstens eine Drucksensor (22) den Ist-Wert für das Niveau des Fahrzeugaufbaus und/oder für den Luftdruck in dem wenigstens einen Luftfederbalg (6, 10, 36, 40) einsteuert, um zum Regelabgleich des Ist-Werts mit einem Soll-Wert für das Niveau des Fahrzeugaufbaus und/oder für den Luftdruck in dem wenigstens seinen Luftfederbalg (6, 10, 36, 40) Stellbefehle für das wenigstens eine Magnetventil (4, 14, 16, 18, 24, 42, 44, 46, 56, 58) zu erzeugen, **dadurch gekennzeichnet, dass**
e) das erste elektronische Steuergerät (ECU1) mit wenigstens einem zweiten elektronischen Steuergerät (ECU2) zum Datenaustausch verbunden ist, in welchem Routinen einer Bremsdruckregelung (EBS) und/oder einer Bremsschlupfregelung (ABS) und/oder einer Antriebsschlupfregelung (ASR) und/oder einer Fahrdynamikregelung (ESP) und/oder eines Fahrerassistenzsystems (ACC) implementiert sind, wobei das zweite elektronische Steuergerät (ECU2) den SollWert für das Niveau des Fahrzeugaufbaus und/oder für den Luftdruck in dem wenigstens einen Luftfederbalg (6, 10, 36, 40) in das erste elektronische Steuergerät (ECU1) einsteuert, damit in dem ersten elektronischen Steuergerät (ECU1) der Regelabgleich erfolgt.

2. Fahrzeugregeleinrichtung nach Anspruch 1, **dadurch gekennzeichnet, dass** das erste elektronische Steuergerät (ECU1) mit dem zweiten elektronischen Steuergerät (ECU2) über einen Datenbus (60) verbunden ist.

3. Fahrzeugregeleinrichtung nach einem der vorhergehenden Ansprüche, **dadurch gekennzeichnet, dass** das Fahrdynamikregelsystem ein Elektronisches Stabilitätsprogramm (ESP) beinhaltet.

4. Fahrzeugregeleinrichtung nach einem der vorhergehenden Ansprüche, **dadurch gekennzeichnet, dass** das Fahrerassistenzsystem einen Abstandsregeltempomaten (ACC, Adaptive Cruise Control), ein Kneeling-System eines Autobusses oder ein System zur Anpassung der Fahrzeughöhe während der Fahrt beinhaltet.

5. Fahrzeugregeleinrichtung nach einem der vorhergehenden Ansprüche, **dadurch gekennzeichnet, dass** wenigstens das wenigstens eine Magnetventil (4, 14, 16, 18; 16, 18, 56, 58) und das erste elektronische Steuergerät (ECU1) zu einer Baueinheit modulartig zusammengefasst sind.

6. Fahrzeugregeleinrichtung nach einem der vorhergehenden Ansprüche, **dadurch gekennzeichnet, dass** die Luftfederungseinrichtung (1) ausgebildet ist, dass der Luftdruck und/oder das Niveau radindividuell, achsweise oder seitenweise regelbar sind.

7. Fahrzeugregeleinrichtung nach einem der vorhergehenden Ansprüche, **dadurch gekennzeichnet, dass** der Ist-Wert für das Niveau des Fahrzeugaufbaus und/oder für den Luftdruck in dem wenigstens einen Luftfederbalg (6, 10, 36, 40) über das erste elektronische Steuergerät (ECU1) in das zweite elektronische Steuergerät (ECU2) eingesteuert wird, um dort für wenigstens eine von einer Regelung des Niveaus des Fahrzeugaufbaus und/oder von einer Regelung des Luftdrucks in dem wenigstens einen Luftbalg (6, 10, 36, 40) abweichenden Funktion verwendet zu werden.

8. Fahrzeugregeleinrichtung nach einem der vorhergehenden Ansprüche, **dadurch gekennzeichnet, dass** von dem Niveausensor (52, 53, 54) und von dem Drucksensor (22) abweichende Sensoren vorgesehen sind, welche Signale an das erste Steuergerät (ECU1) zur dortigen Verarbeitung einsteuern, wobei diese Signale auch in das zweite Steuergerät (ECU2) eingesteuert werden.

9. Fahrzeugregeleinrichtung nach Anspruch 8, **dadurch gekennzeichnet, dass** die von dem Niveausensor (52, 53, 54) und von dem Drucksensor (22) abweichenden Sensoren Reifendrucksensoren und/oder Raddrehzahlsensoren beinhalten.

10. Fahrzeugregeleinrichtung nach einem der vorhergehenden Ansprüche, **dadurch gekennzeichnet, dass** das zweite Steuergerät (ECU2) ein Bremssteuergerät oder ein zentraler Fahrzeugrechnet ist.
